Europäisches Patentamt

European Patent Office

Office européen des brevets

(19)

(11) Publication number: **0 106 573**
**A2**

(12) # EUROPEAN PATENT APPLICATION

(21) Application number: **83305623.7**

(22) Date of filing: **22.09.83**

(51) Int. Cl.³: **G 01 C 19/64**

(30) Priority: **29.09.82 GB 8227736**

(43) Date of publication of application:
**25.04.84 Bulletin 84/17**

(84) Designated Contracting States:
**DE FR NL**

(71) Applicant: **BRITISH AEROSPACE PUBLIC LIMITED COMPANY**
**100 Pall Mall**
**London SW1Y 5HR(GB)**

(72) Inventor: **Malvern, Alan Richard**
**British Aerospace P.L.C. Downshire Way**
**Bracknell Bershire, RG12 1QL(GB)**

(74) Representative: **Saul, David Jonathan et al,**
**British Aerospace plc Corporate Patents Dept.**
**Brooklands Road**
**Weybridge Surrey KT13 0SJ(GB)**

(54) **Ring laser readout arrangements.**

(57) A ring laser gyroscope is provided with a readout arrangement in which its two readout beams (5,6) are combined and the polarisation thereof modified such that a sngle combined beam (18) is provided having linear polarisation the plane of which rotates as a consequence of change of phase difference between the readout beams (5,6), and thereby corresponds to the rate of rotation of the ring laser gyroscope.

Fig.2.

EP 0 106 573 A2

RING LASER READOUT ARRANGEMENTS

This invention relates to readout arrangements for ring laser gyroscopes.

Ring laser gyroscopes comprise a gas-filled cavity or ring disposed at right angles to a sensitive axis, that is to say the axis about which rotation is to be measured. The cavity has three or more linear and usually equal length limbs. Around the cavity are propagated two beams of light travelling in opposite directions. The beams are directed around the ring by three or more mirrors located at the cavity corners and are regeneratively amplified at frequencies for which the path length of the beams equals an integral number of wave-lengths. Amplification is achieved through a gas discharge within the cavity for which purposes an anode and a cathode are provided. The two beams are of nominally identical linear polarisation and amplitude.

The path length differences of the two beams due to inertial rotation rates about the sensitive axis cause a difference in the frequencies of the two beams and this is monitored by extracting a small portion of energy from each beam through one of the corner mirrors. This energy is extracted in the form of two readout beams each of which has the same characteristics as the counter-rotating beam with which it is associated. Conventionally, these two readout beams are superimposed by combining means, for example, a prism, to create a fringe pattern of alternate interference which appears to move to the right or left depending upon the frequency difference of the two beams, the direction being determined by whichever beam is at a higher frequency, which itself is determined by the direction of rotation of the cavity about its sensitive axis. A measurement of the rotation rate is made by recording the rate at which the fringe (i.e. the intensity maximum) moves. This is achieved by a detector, for example a photo diode, which senses the fringes. In order to determine the direction of fringe movement, a logic circuit is provided and is fed by two detectors, for example a split diode, spaced to give a $90^{\circ}$ phase difference so that positive and negative counts can be accumulated. Thus with up-down counting the net number of accumulated counts depends only, in an ideal situation, upon the net angle through which the cavity is turned.

However, it is found that there are certain disadvantages inherent in this typical readout arrangement. In particular, the combining means has to be very accurately manufactured and aligned to give a desired fringe separation, so that the detectors can function. Moreover, the combining means are particularly susceptible to misalignments caused by vibration. For example, where the combining means is a prism, it must be accurately manufactured with angular tolerances within seconds of arc between the faces and then aligned carefully and rigidly to give the required fringe spacing and orientation.

The present invention has for an objective the provision of a readout arrangement in which such disadvantages are at least mitigated.

According to the present invention, a ring laser gyroscope has a cavity in which two counter-rotating light beams are propagated, means for extracting energy from the cavity in the form of two readout beams, each having the same characteristics as its respective counter-rotating beam, and a readout arrangement characterised by including combining and polarisation modifying means for combining the two readout beams into a single beam, this single beam having linear polarisation the rotation of the plane of which is proportional to change in phase between the two readout beams, and detector means to measure said rotation.

Preferably, the polarisation modifying means comprises first means for reorientating the plane of polarisation in at least one beam so that the planes of polarisation become orthogonal, and second means for reorientating the orthogonal planes of polarisation of the combined beam into said single rotatable plane.

Some embodiments of the invention are now described by way of example with reference to the accompanying drawings in which -

Figure 1 is a diagrammatic view of a typical readout arrangement,

Figure 2 is a diagrammatic view of one embodiment of a readout arrangement according to the invention, and

Figure 3 is a similar view to that of Figure 2, but showing an alternative readout arrangement according to the invention.

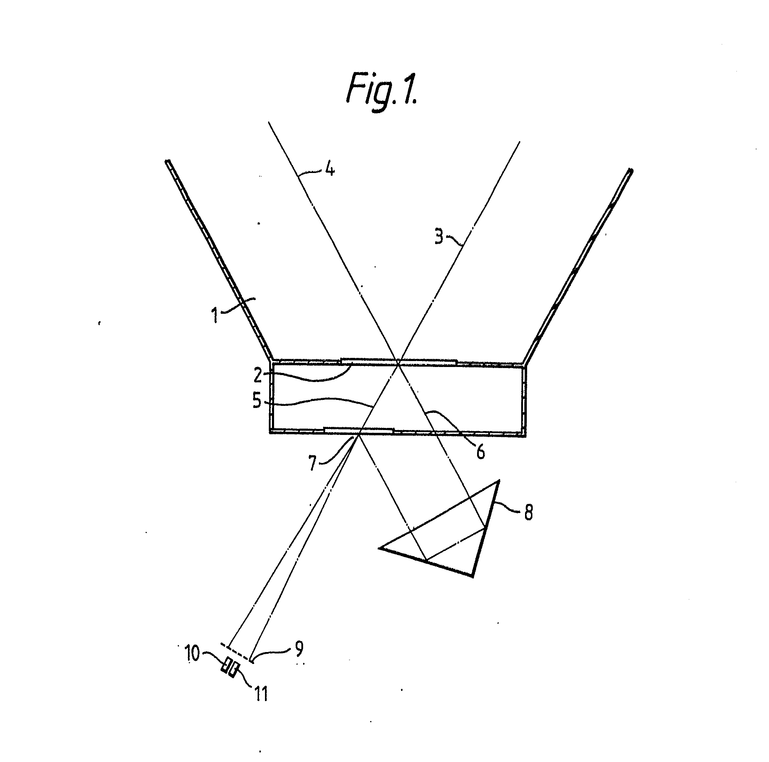

Referring initially to Figure 1, a ring laser gyroscope has a gas-filled cavity 1 with a corner mirror 2 upon which a clockwise light beam 3 and a counter-clockwise light beam 4 are incident. The beams 3 and 4 have nominally identical amplitude and linear polarisation. The mirror 2 is partially transmissive, so that part of the energy of each light beam is transmitted therethrough in the form of two readout beams 5 and 6. These two readout beams have the same characteristics as the beams 2 and 3 respectively.

The two beams 5 and 6 are made approximately co-linear at 7 by the provision of a $90^{\circ}$ corner prism 8, that is to say a form of combining means, to provide a fringe pattern shown at 9. A detector 10, for example a photo-diode whose dimensions are smaller than the fringe spacing, is positioned such that the rate at which the intensity maxima of the fringe pattern move past the detector station can be recorded, thereby measuring the rate of rotation of the ring laser gyroscope about its sensitive axis. Since the sense of rotation of the gyroscope determines the direction in which the fringe pattern moves, a further detector 11 is placed to give a phase difference of $90^{\circ}$ (one-quarter of one fringe) from the output of the detector 10 and this, together with a logic circuit, gives the rotation sense.

As is well-known with this type of readout, the ring laser gyroscope is an integrating rate instrument with a digital output and thus the net number of accumulated fringe counts depends only, in ideal circumstances, upon the net angle through which the gyroscope is turned. This described arrangement for obtaining an output has certain disadvantages in practice; it is therefore desirable to provide a different arrangement which nevertheless retains the integrating rate function, together with the digital output.

The disadvantages stem from the fact that the fringes of the pattern 9 are sensed for counting by the two detectors 10 and 11 (which can be typically in the form of a split diode) and therefore the fringe separation is set by the need to give the $90^{\circ}$ phase difference between the outputs of the two detectors. This requires that the combining means 8, to give the required fringe spacing and orientation, must be manufactured very accurately with angular tolerances within seconds of arc between its faces and must be aligned in use very accurately. Moreover there is the almost insurmountable problem of vibration, even when the combining means is mounted directly upon a corner mirror of the ring laser gyroscope.

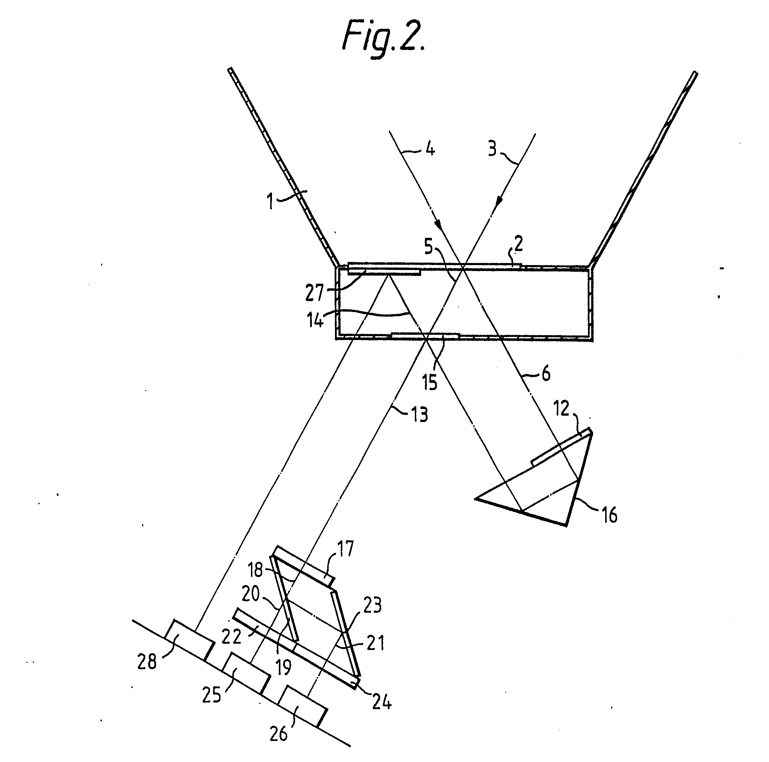

Figure 2 illustrates a readout arrangement which overcomes this problem. In this Figure, like components and features have like reference numerals to the earlier Figure.

That readout beam referenced 6 is arranged to pass through means for reorientating the plane of its polarisation, so that the planes of polarisation of the beams 5 and 6 are orthogonal. This is achieved by turning the polarisation of the beam 6 through $90^{\circ}$ by means of a half-wave retardation plate 12 whilst the polarisation of the beam 5 remains unchanged. The plate 12 is of mica or quartz.

The beams 5 and 6 are subsequently combined in a beam 13 by turning the beam 6 through $180^{\circ}$ by retro-reflecting means 16 in the form of a corner cube or a right angled prism. An identical combined beam 14 is also formed by providing a half reflecting mirror at 15 upon one side of which the beam 6 is incident and upon the other side of which the beam 5 is incident.

The identical beams 13 and 14 are thus each formed by the combined beams 5 and 6 with their respective signals orthogonally polarised.

The beam 13 is then passed through a quarter-wave retardation plate 17 with its slow and fast axes

orientated at 45$^O$ to the orthogonal planes of polarisation of the two signals in said combined beam 13.

This arrangement changes any phase difference between the two readout beams 5 and 6 into a single linearly polarised beam 18 in which the angular position of the emergent plane of polarisation is given by the phase difference, the phase change effecting rotation of the plane of polarisation. A complete revolution of the emergent polarisation plane in the beam 18 is caused by a phase difference of two wave-lengths.

Subsequently, the beam 18 is directed onto a beam splitter 19 which provides two identical sub beams, that transmitted being referenced 20 and that reflected being referenced 21. The sub beam 20 is directed to a linear polariser 22 whilst that sub beam 21 is directed, after reflection at 23, to a linear polariser 24, the twin polarisers being set at 45$^O$ to one another, so that signals in quadrature are provided to allow up/down counting of the emergent light pulses. This is achieved by means of two photo-diodes 25 and 26, one for each sub beam 20 and 21 respectively. The sub beams 20 and 21 preferably overlap one another onto the two photo diodes.

This arrangement renders the careful manufacture and alignment of the combining means unnecessary since the phase difference of 90$^O$ required from the outputs of the two photo diodes 25 and 26 is set by the relative orientation of 45° between the two polarisers 22 and 24. The arrangement is substantially unaffected by vibration - induced misalignments.

The combined beam 14 which is formed by half reflection of the beam 5 and by half transmission of the beam 6 at 15, may be conveniently used to supply a lock-in control signal (LIC) and/or a path length control signal (PLC) where such signals are desired for the counter-rotating beams 3 and 4. In this case, the beam 14 is reflected by a mirror surface at 27 onto a photo diode reference 28. In some circumstances, it is advantageous to use an LIC signal which is the sum of the two beams 5 and 6 with an equal contribution from both since, from practical experience, it is found that when the two beam backscatter modulation amplitude is at a minimum then the random noise of the ring laser gyroscope is least. This condition is found to be more readily achieved by using a combined beam of the type referenced 14.

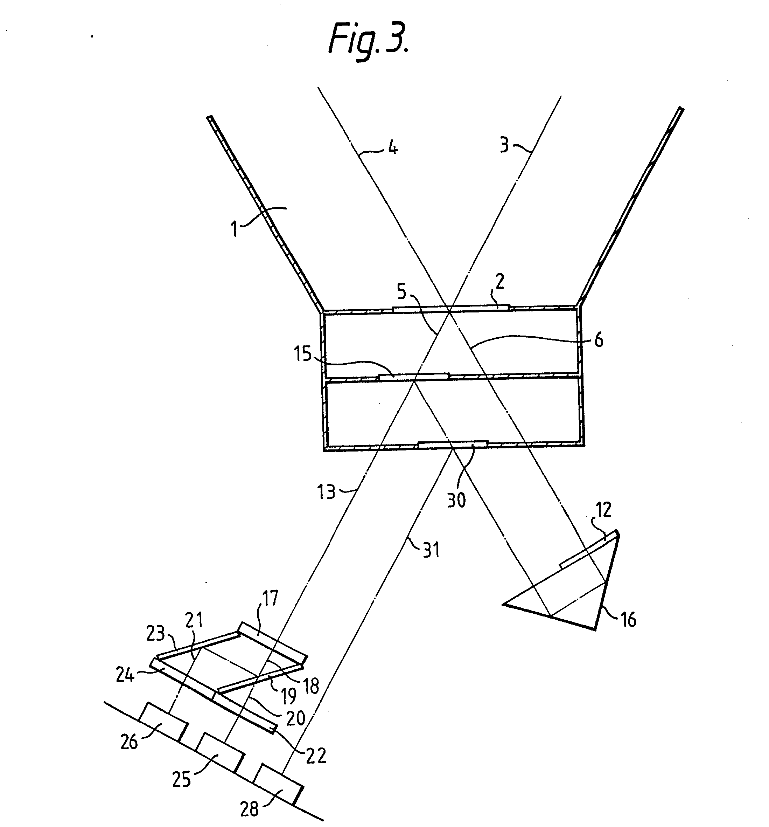

Referring now to Figure 3, in which an alternative arrangement to that in Figure 2 is described, in which a non-combined beam is provided for PLC and/or LIC. It will be recalled that a combined beam 14 was provided for such purposes in the embodiment of Figure 2. The non-combined beam may be desirable where undesirable fringing is found to occur in the combined beam 14 due to minor imperfections in the optical components in the beam path.

Thus in the embodiment of Figure 3, the readout beam 6 is passed through a half-wave retardation plate 12 to turn the polarisation of the beam 6 through 90° whilst the polarisation of the beam 5 remains unchanged. The beams are subsequently combined in a beam 13 by providing a half-reflecting mirror at 15 upon one side of which the beam 6 is incident and upon the other side of which the beam 5 is incident. The beam 6 is turned through 180° by retro-reflecting means 16 in the form of a corner cube or right-angle prism. As previously described with reference to Figure 2, the beam 13 is thus formed by the combined beams 5 and 6 with their respective signals orthogonally polarised. The remaining components and optical path of the beam 13 are precisely as described with reference to Figure 2. However, in between the retro-reflecting means 16 and the half-reflecting mirror 15, in the path of the beam 6 is provided a partially reflective mirror or beam splitter 30 (say 20% reflective) which reflects part of the energy of beam 6 along a beam 31 to a photo-diode 28. The non-combined beam 31 thus replaces the combined beam 14 of Figure 2 to provide PLC and/or LIC.

CLAIMS:

1.     A ring laser gyroscope having a cavity (1) in which two counter rotating light beams (3,4) are propagated, means (2) for extracting energy from the cavity in the form of two readout beams (5,6), each having the same characteristics as its respective counter-rotating beam, and a readout arrangement characterised by including combining (16) and polarisation modifying means (12,17) for combining the two readout beams (5,6) into a single beam (18), this single beam having linear polarisation the plane of which rotates proportionally to change in phase difference between the two readout beams (5,6), and detector means to measure said rotation.

2.     A ring laser gyroscope according to Claim 1, wherein the polarisation modifying means comprises first means (12) for reorientating the plane polarisation in at least one beam (6), so that the planes of polarisation of each beam (5,6) are orthogonal, and second means (17) for reorientating the orthogonal planes of polarisation of the combined beam (13) into a single rotatable plane.

3.     A ring laser gyroscope according to Claim 2, wherein the combining means comprises a retro-flector (16), the first polarisation modifying means (12) comprises a half-wave retardation means, and the second polarisation modifying means (17) comprises a quarter wave retardation means.

- 11 -

4. A ring laser gyroscope according to Claim 3, wherein the second polarisation modifying means (17) comprises a quarter wave retardation plate having its axes set at $45^{\circ}$ to the orthogonal planes of polarisation of the single combined beam (13).

5. A ring laser gyroscope according to any one of the previous Claims in which the detector means comprises beam splitting means (19) for providing two sub-beams (20,21), polarisation means (22,24) in each sub-beam set with their axes of polarisation set at $45^{\circ}$ to one another, and photodetector means (25,26) for each sub-beam set to detect the emergent light pulses from each polarisation means (22,24).

6. A ring laser gyroscope according to any one of the previous Claims, having path length control means and lock-in control means, and further including means (15) to extract a beam (14) having the characteristics of the combined beam (13) for use with at least one of said control means.

7. A ring laser gyroscope according to any one of Claims 1 to 5, having path length control means and lock-in control means, and further including means (30) to extract a beam (31) having the characteristics of a non-combined beam (6) for use with at least one of said control means.

8. A ring laser gyroscope substantially as described, with reference to Figure 2 or Figure 3.

Fig.1.

# Fig.2.

# Fig.3.